Europäisches Patentamt

European Patent Office

Office européen des brevets

(19)

(11) **EP 0 722 977 B1**

(12) **FASCICULE DE BREVET EUROPEEN**

(45) Date de publication et mention
de la délivrance du brevet:
**28.04.1999 Bulletin 1999/17**

(51) Int Cl.⁶: **C08K 3/36**, B60C 9/18,
C08L 21/00

(21) Numéro de dépôt: **96100204.5**

(22) Date de dépôt: **09.01.1996**

(54) **Enveloppe de pneumatique à base de silice précipitée présentant une résistance au roulement améliorée**

Luftreifen auf Basis niedergeschlagener Kieselsaüre mit einem verbesserten Rollwiderstand

Pneumatic tyre containing precifitated silica having an improved rolling resistance

(84) Etats contractants désignés:
**AT BE DE ES FR GB IT LU**

(30) Priorité: **20.01.1995 FR 9500933**

(43) Date de publication de la demande:
**24.07.1996 Bulletin 1996/30**

(73) Titulaire: **COMPAGNIE GENERALE DES
ETABLISSEMENTS MICHELIN - MICHELIN & CIE
63040 Clermont-Ferrand Cédex (FR)**

(72) Inventeur: **Vasseur, Didier
F-63100 Clermont-Ferrand (FR)**

(74) Mandataire: **Hiebel, Robert
Michelin & Cie,
Service SGD/LG/PI Ladoux
63040 Clermont-Ferrand Cedex 01 (FR)**

(56) Documents cités:
**FR-A- 2 353 486           US-A- 5 126 501**

• **DATABASE WPI Week 74 Derwent Publications
Ltd., London, GB; Class 37, AN 65587V &
JP-B-49 031 041 (TOYO RUBBER IND CO LTD),
19 Août 1974**

Printed by Jouve, 75001 PARIS (FR)

## Description

La présente invention est relative à une enveloppe de pneumatique à carcasse radiale, comportant une armature de sommet à faible perte hystérétique possédant une résistance au roulement améliorée.

Depuis que les économies de carburant et la nécessité de protéger l'environnement sont devenues une priorité, il est souhaitable de mettre en oeuvre des compositions caoutchouteuses utilisables pour la fabrication de divers produits semi-finis entrant dans la constitution d'enveloppes de pneumatiques tels que par exemple des sous-couches, des gommes de calandrage des nappes de tissu câblé ou des bandes de roulement afin d'obtenir des pneumatiques possédant une résistance au roulement réduite.

Il est connu de l'homme de l'art que le premier et principal facteur ayant une incidence sur la résistance au roulement d'un pneumatique à carcasse radiale réside dans la composition de caoutchouc constitutive de la bande de roulement du pneumatique.

Un progrès significatif a été réalisé en matière d'enveloppe de pneumatique possédant à la fois une résistance au roulement réduite, une excellente adhérence tant sur sol sec que sur sol humide et enneigé, une très bonne résistance à l'usure et un bruit de roulement réduit par la mise en oeuvre, à titre de bande de roulement d'un pneumatique d'une composition de caoutchouc, décrite dans la demande de brevet européen EP-A-0 501 227, vulcanisable au soufre, obtenue par travail thermomécanique d'un copolymère de diène conjugué et d'un composé vinyle aromatique préparé par polymérisation en solution avec 30 à 150 parties en poids pour 100 parties en poids d'élastomère d'une silice précipitée hautement dispersible.

Il est également connu de l'homme de l'art que le second facteur exerçant une influence prépondérante en matière de résistance au roulement d'une enveloppe de pneumatique à carcasse radiale est l'armature de sommet.

L'armature de sommet se compose en général de deux nappes de tissu câblé ayant des câbles inextensibles parallèles entre eux dans une nappe et croisés d'une nappe à la suivante en faisant avec la direction circonférentielle des angles égaux ou non et compris entre 10° et 45°. Les câbles sont soit des câbles métalliques, notamment en acier, soit des câbles textiles synthétiques, notamment des aramides. Ces nappes inclinées par rapport à la direction circonférentielle sont dites de « travail ».

L'armature de sommet peut, notamment dans le cas de pneus destinés aux véhicules de tourisme rapides, outre les nappes de travail comporter une ou plusieurs nappes de tissu câblé, de bandelettes de tissu câblé ou de fil enroulé hélicoïdalement dont les câbles constitutifs ou le fil, sont substantiellement non inclinés par rapport à la direction circonférentielle, c'est-à-dire font un angle voisin de zéro degré et dites « nappes à zéro degré ». Le câble est généralement un câble en textile synthétique, notamment un polyamide.

La gomme de calandrage utilisée pour les nappes de travail est généralement constituée exclusivement par du caoutchouc naturel ou alors par un coupage de caoutchouc naturel et d'un caoutchouc synthétique diénique ou un mélange de caoutchoucs synthétiques diéniques, le caoutchouc naturel étant cependant présent en quantité majoritaire en poids. Cette gomme de calandrage est habituellement renforcée par du noir de carbone à titre de charge majoritaire. Toutefois, il est connu de l'homme de l'art, par exemple d'après la demande de brevet français FR-A-80 22131 et le brevet US-B-4 299 640, d'utiliser de la silice en faible quantité, de l'ordre de 10 à 15 parties en poids, pour accroître l'adhérence de la gomme au câblé métallique et en particulier au câblé en acier laitonné. Mais la silice est utilisée en association avec une résine renforçante, généralement à base de résorcine, pour augmenter le module de la gomme de calandrage, étant bien connu de l'homme de l'art que l'usage de la silice dans des pneumatiques en tant que charge renforçante a très longtemps été freiné par, entre autre, le faible module d'élasticité des mélanges de caoutchoucs chargés à la silice.

L'usage de la silice dans un pneumatique, a également été largement freiné en raison des difficultés de mise en oeuvre dues aux interactions silice/silice qui tendent à l'état cru à provoquer une agglomération des particules de silice avant et même après mélangeage, rendant la mise en oeuvre plus difficile qu'avec le noir de carbone et conduisant à des gommes dures à cru dès que le pourcentage de silice utilisé dans la composition est relativement important. En raison de leur dureté, de telles gommes sont inappropriées comme gommes de calandrage de tissu câblé et sont de surcroît à l'origine de gros problèmes de cohésion à cuit. L'emploi de telles gommes conduit à une séparation prématurée des câbles de la gomme, notamment aux extrémités des nappes de travail.

Le brevet US-B-5 066 721 décrit une composition de caoutchouc à base d'un polymère diénique fonctionnalisé à l'aide d'un composé silane particulier comportant un groupe aryloxy non hydrolysable, susceptible d'être utilisé comme gomme de calandrage de tissu câblé notamment des nappes de travail d'armature de sommet et susceptible de comporter jusqu'à 20 parties en poids d'une silice conventionnelle, c'est-à-dire une silice ayant une haute surface spécifique CTAB, supérieure à 100 m$^2$/g et faiblement dispersible. L'amélioration de la résistance au roulement du pneu est essentiellement due à la nature du polymère diénique fonctionnalisé permettant certes à titre incident d'augmenter dans une très faible proportion la teneur en silice de la gomme de calandrage mais augmentant aussi par là même le problème de cohésion interne de la gomme et le risque d'une séparation prématurée du tissu câblé de la gomme.

L'invention a essentiellement pour but de diminuer la résistance au roulement d'une enveloppe de pneumatique à carcasse radiale sans significativement pénaliser les autres propriétés du pneumatique telles que l'adhérence, la résistance à l'usure, la résistance à la fatigue notamment de l'armature du sommet et sans entraîner de pénalisation significative au niveau de la fabrication du pneumatique, particulièrement dans le domaine de la mise en oeuvre à cru et de la cohésion à cuit de la composition de caoutchouc employée pour la réalisation de l'armature de sommet dudit pneumatique.

La demanderesse a découvert que le but poursuivi est atteint selon l'invention par utilisation d'une silice de faible surface spécifique CTAB et BET à titre de charge renforçante des compositions élastomères diéniques utilisables en tant que gomme d'armature de sommet d'un pneumatique à carcasse radiale.

L'invention a pour objet une enveloppe de pneumatique à carcasse radiale comportant une bande de roulement, deux bourrelets inextensibles, deux flancs reliant les bourrelets à la bande de roulement et une armature de sommet située entre la carcasse et la bande de roulement comportant au moins deux nappes de tissu câblé, ladite armature de sommet comportant une gomme élastomérique diénique comprenant à titre de charge renforçante une silice précitée possédant une surface spécifique CTAB ≤ à 125 m²/g et une surface spécifique BET ≤ à 125 m²/g.

L'invention a également pour objet une composition élastomérique diénique utilisable dans la constitution d'une armature de sommet d'un pneumatique à carcasse radiale comportant à titre de charge renforçante une silice de surface spécifique CTAB ≤ à 125 m²/g et une surface spécifique BET ≤ à 125 m²/g.

A titre préférentiel, la silice utilisable comme agent de renforcement de la gomme élastomérique diénique mise en oeuvre dans l'armature de sommet est une silice hautement dispersible possédant une surface spécifique CTAB comprise entre 50 et 120 m²/g. Lorsque la surface spécifique est < à 50 m²/g, le renforcement est moindre et la cohésion amoindrie. Lorsque la surface spécifique CTAB est > à 125 m²/g, on obtient des mélanges caoutchouteux de dureté accrue et pénalisante pour constituer des gommes de calandrage d'armature de sommet.

Par silice hautement dispersible, on entend toute silice ayant une aptitude à la désagglomération et à la dispersion dans une matrice polymérique très importante, observable par microscopie électronique ou optique, sur coupes fines. La dispersibilité de la silice est également appréciée au moyen d'un test d'aptitude à la désagglomération aux ultrasons (Fd) suivi d'une mesure, par diffraction sur un granulomètre, de la taille des particules de silice pour déterminer le diamètre médian (D50) des particules après désagglomération comme décrit dans la demande de brevet EP-A-0 520 862 dont le contenu est incorporé ici ou dans l'article paru dans la revue Rubber World, juin 1994, pages 20-24, intitulé « Dispersibility measurements of prec. silicas ».

A titre plus préférentiel, les silices hautement dispersibles mises en oeuvre dans le cadre de la présente invention sont toutes silices répondant aux caractéristiques de surfaces spécifiques CTAB et BET définies auparavant, ayant un diamètre médian, après désagglomération aux ultrasons, inférieur à 5µm et possédant un facteur de désagglomération aux ultrasons (Fd) supérieur à 2 ml et de préférence supérieur à 4 ml lorsque la surface spécifique CTAB est > à 100 m²/g. En d'autres termes, conviennent toutes silices hautement dispersibles obéissant à la relation : Fd > 1,25 D 50 - 5 > 0. A titre d'exemple d'une telle silice on peut citer la silice Zeosil 85 MP de la Société Rhône-Poulenc. L'emploi d'une silice hautement dispersible réduit à un minimum les déchéances en fatigue de la gomme élastomérique et par voie de conséquence les risques de séparation de la gomme des câblés.

On peut bien entendu également utiliser des coupages de différentes silices de surface spécifique CTAB inférieure ou égale à 125 m²/g. La surface spécifique CTAB est déterminée selon la méthode NFT 45007 de novembre 1987. La surface spécifique BET est déterminée selon la méthode de BRUNAUER, EMMET, TELLER décrite dans « The journal of the American Chemical Society, Vol. 80, page 309 (1938)» correspondant à la norme NFT 45007 de novembre 1987. Les silices mises en oeuvre selon l'invention possèdent généralement une prise d'huile DOP égale ou supérieure à 180 ml/100 g de silice et plus préférentiellement comprise entre 190 et 250 ml/100 g.

La prise d'huile DOP est déterminée selon la norme NFT 30-022 en mettant en oeuvre le diotcylphtalate.

A titre de gomme élastomérique diénique utilisable en tant que gomme d'armature de sommet, c'est-à-dire soit en tant que gomme de calandrage de nappes de tissu câblé, soit en tant que coussin de gomme disposé au-dessus ou au-dessous des nappes de travail convient le caoutchouc naturel ou un coupage de caoutchouc naturel et d'un caoutchouc synthétique diénique ou d'un mélange de caoutchoucs synthétiques diéniques. A titre préférentiel, le caoutchouc naturel est présent à titre majoritaire et plus préférentiellement représente 75 à 100 % en poids. A titre de caoutchoucs synthétiques diéniques utilisables seuls ou en mélange entre eux en coupage avec le caoutchouc naturel conviennent tout homopolymère obtenu par polymérisation d'un monomère diène conjugué ayant de 4 à 12 atomes de ce carbone, tout copolymère obtenu par copolymérisation d'un ou plusieurs diènes conjugués entre eux ou avec un ou plusieurs composés vinyle aromatique ayant de 8 à 20 atomes de carbone. A titre de diènes conjugués conviennent notamment le butadiène-1,3, le 2-méthyl-1,3-butadiène, les 2,3-di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène, le 2,4-hexadiène, etc...

A titre de composés vinyle aromatique conviennent notamment le styrène, l'ortho-, méta-, para-méthylstyrène, le mélange commercial "vinyle-toluène", le para-tertiobutyl-styrène, les méthoxy-styrènes, les chloro-styrènes, le vinyle mésitylène, le divinyle benzène, le vinyle naphtalène, etc...

Les copolymères peuvent contenir entre 99 % et 20 % en poids d'unités diéniques et de 1 % à 80 % en poids d'unités vinyle aromatiques. Les polymères peuvent avoir toute microstructure qui est fonction des conditions de polymérisation utilisées, notamment de la présence ou non d'un agent modifiant et/ou randomisant et des quantités d'agent modifiant et/ou randomisant employées. Les polymères peuvent être à blocs, statistiques, séquencés, microséquencés, etc... et être préparés en dispersion ou en solution, être couplés et/ou étoilés ou fonctionnalisés.

A titre préférentiel conviennent les polybutadiènes et en particulier les polybutadiènes cis-1,4 ou 1,2-syndiotactique et ceux ayant une teneur en unités-1,2 comprise entre 4 % et 80 %, les polyisoprènes, les copolymères de butadiène-styrène et en particulier ceux ayant une teneur en styrène comprise entre 5 et 50 % en poids et plus particulièrement entre 20 % et 40 % en poids, une teneur en liaisons -1,2 de la partie butadiénique comprise entre 4 % et 65 %, une teneur en liaisons trans-1,4 comprise entre 30 % et 80 %, les copolymères de butadiène-styrène-isoprène.

A titre préférentiel, c'est un mélange de copolymère butadiène-styrène et de polybutadiène qui est utilisé en coupage avec le caoutchouc naturel jusqu'à concurrence de 25 % en poids.

La gomme élastomérique diénique utilisable en tant que gomme d'armature de sommet contient bien sûr les autres constituants et additifs habituellement utilisés dans les mélanges de caoutchouc comme des plastifiants, pigments, antioxydants, du soufre, des accélérateurs de vulcanisation, des huiles d'extension, un ou des agents de couplage ou de liaison de silice et/ou un ou des agents de recouvrement de la silice tels que des polyols, amines, alcoxysilanes, etc...ainsi que des agents d'adhésion du caoutchouc au métal tels que par exemple les sels et complexes de cobalt tels que le naphténate, le stéarate ou l'hydroxyde de cobalt, le composé Manobond 680 C vendu par Manchem, etc..., lorsque la gomme élastomérique diénique est utilisée en tant que gomme de calandrage de nappes de travail ayant des câblés métalliques.

L'effet bénéfique au niveau des propriétés, notamment de la résistance au roulement, est également obtenu lorsqu'on utilise à la fois de la silice et du noir de carbone en tant que charge renforçante de la gomme d'armature de sommet.

La quantité de noir de carbone peut varier dans de larges limites étant toutefois entendu que l'amélioration des propriétés sera d'autant plus importante que le taux de silice présent est élevé. La quantité de noir de carbone présent est préférentiellement égale ou inférieure à 100 % de la quantité de silice présente dans la composition, et plus préférentiellement représente 1 % à 50 % en poids de la charge renforçante totale.

Tous les noirs de carbone conventionnellement utilisés dans les pneus et particulièrement dans les gommes d'armature de sommet conviennent. On peut également utiliser une faible proportion en poids de silice de surface spécifique CTAB > à 125 $m^2/g$ et/ou de surface spécifique BET > à 125 $m^2/g$ hautement dispersible ou conventionnelle.

L'effet bénéfique au niveau de la diminution de l'hystérèse de la gomme d'armature de sommet et par voie de conséquence de la diminution de la résistance au roulement (voir Tire Technology International 1993 p. 58 à 62) est optimal lorsque dans un pneu dépourvu de nappes à zéro degré, la gomme d'armature de sommet selon l'invention constitue la gomme de calandrage de la totalité des nappes de travail. L'effet bénéfique est bien sûr moindre si seule une partie des nappes de travail est calandrée avec cette gomme d'armature de sommet renforcée avec la silice hautement dispersible et de faibles surfaces spécifiques CTAB et BET. Dans le cas d'un pneu comportant une ou des nappes à zéro degré, il est préférable que la gomme de calandrage du tissu câblé, qu'il se présente sous forme de nappe d'une certaine largeur, c'est-à-dire voisine de la largeur des nappes de travail, ou de bandelettes ou de fil unitaire gainé, possède également une telle gomme de calandrage. Un effet bénéfique, quoique moindre, est également obtenu lorsque l'armature de sommet est conventionnellement réalisée avec une gomme d'armature de sommet pour les nappes de travail et la ou les nappes à zéro degré s'il y en a, et qu'on dispose soit sous la nappe de travail proche de la carcasse ou au-dessus, selon l'armature de sommet, de la nappe de travail ou de la nappe à zéro degré proche de la bande de roulement, un coussin de gomme élastomérique diénique renforcée avec la silice hautement dispersible et de faible surface spécifique. Ce coussin de gomme peut également constituer la sous-couche de la bande de roulement.

L'armature de sommet conforme à l'invention peut être mise en oeuvre dans tout pneumatique à carcasse radiale, que la bande de roulement soit renforcée avec de la silice à titre majoritaire ou non ou avec du noir de carbone exclusivement. Bien entendu, c'est lorsque le pneumatique conforme à l'invention possède en outre une bande de roulement renforcée à titre majoritaire par de la silice hautement dispersible et de surface spécifique CTAB supérieure à 125 $m^2/g$ telle que décrite dans la demande de brevet européen EP-A-0 501 227 que la résistance au roulement du pneumatique est la moindre.

Cet effet bénéfique au niveau de la résistance au roulement du pneumatique conforme à l'invention est obtenu sans pénalisation significative des autres propriétés du pneumatique et sans pénalisation significative au niveau de la mise en oeuvre à cru de la gomme d'armature de sommet qui reste pratiquement inchangée par rapport à celle d'une gomme d'armature de sommet conventionnelle chargée au noir de carbone à titre majoritaire et au niveau de la cohésion à cuit de ladite gomme qui conserve une bonne cohésion, notamment en déchirabilité et ce même après vieillissement.

Selon une variante, on peut associer à la charge de silice une résine ou un mélange de résines et préférentiellement une résine formophénolique ou formorésorcinolique dans le but d'accroître le module aux petites déformations tout en conservant substantiellement les autres propriétés.

L'invention est applicable à toutes les catégories de pneus à carcasse radiale, c'est-à-dire aux pneus de tourisme, pneus de camionnettes, pneus poids-lourds, pneus d'avions.

L'invention est illustrée à titre non limitatif par les exemples qui ne sauraient constituer une limitation de la portée de l'invention.

Dans les exemples, les propriétés des compositions de gomme d'armature de sommet sont évaluées comme suit :

- Modules d'allongement à 10 % (MA 10), 100 % (MA 100) et 300 % (MA 300) mesurées selon la norme ISO 471 en MPA
- Allongement à la rupture (AR) en % soit à 23°C, soit à 100°C
- Pertes hystérétiques (PH) : mesurées par rebond à 60°C selon la norme ISO R17667 et exprimées en %
- L'hystérèse est exprimée par la mesure de tg$\delta$ à 80°C à 10 Hertz selon la norme NFT 46026
- Fatigue (MFTR) : exprimée en nombre de cycles, mesurée à déformation imposée sur une éprouvette soumise à un allongement de 90 % jusqu'à rupture de l'éprouvette à l'aide d'un appareil Monsanto MFTR selon la norme AFNOR T 46-021.
- Fatigue (MFTRV) : exprimée en nombre de cycles, mesurée à déformation imposée sur une éprouvette soumise à un allongement de 90 % après un vieillissement de 10 jours en étuve à 77°C, jusqu'à rupture de l'éprouvette,
- Fatigue avec amorce (MFTRA) exprimée en nombre de cycles : mesurée sur une éprouvette comportant une entaille de 1 mm et soumise à un allongement de 60 % à l'aide d'un appareil Monsanto MFTR jusqu'à rupture de l'éprouvette selon la norme AFNOR T46-021.
- Viscosité Mooney ML (1 + 4) à 100° C mesurée selon la norme ASTM D-1646
- L'échauffement (E) : mesuré en degrés Celsius au flexomètre GOODRICH selon la norme ASTM D 623-78
- Propriétés dynamiques en fonction de la température : l'hystérèse est exprimée par la mesure de tg$\delta$ à 80°C et à 10 Hertz selon la norme NF T 46-026).
- La résistance au roulement (RR) est mesurée selon la norme ISO-8767 avec un pneu à carcasse radiale.

Dans les exemples, toutes les parties sont exprimées en poids

Exemple 1

On réalise 5 essais permettant de comparer les propriétés des compositions élastomériques diéniques selon l'invention (essais D et E) à 3 compositions de référence ainsi que les propriétés de résistance de roulement des enveloppes de pneumatique comportant une armature de sommet à base desdites compositions.

Les compositions sont réalisées par un travail thermomécanique en 1 étape qui dure environ 4 minutes avec une vitesse moyenne des palettes de 45 t/mn, jusqu'à atteindre une température maximale de tombée de 160°C suivie d'une étape de finition effectuée à 30°C avec les formulations indiquées au tableau I :

Tableau I

| COMPOSITION | Essai A | Essai B | Essai C | Essai D | Essai E |
|---|---|---|---|---|---|
| Caoutchouc naturel | 100 | 100 | 100 | 100 | 100 |
| Noir de carbone N326 | 52 | | | | |
| Silice ULTRASIL VN2(a) | | 50 | | | |
| Silice ULTRASIL VN3* | | | 50 | | |

(a)*: Silices à haute surface spécifique commercialisées par la société DEGUSSA sous les dénominations respectives ULTRASIL VN2 et ULTRASIL VN3 de surfaces spécifiques CTAB et BET de 128 m$^2$/g et 132 m2/g, un diamètre médian D50 de 11 $\mu$m, un facteur de désagglomération (Fd) de 2 ml pour la première et des surfaces spécifiques CTAB et BET de 169 m$^2$/g et 180 m$^2$/g, un diamètre médian (D50) de 9 $\mu$m et un facteur de désagglomération (Fd) de 3 ml.

Tableau I   (suite)

| COMPOSITION | Essai A | Essai B | Essai C | Essai D | Essai E |
|---|---|---|---|---|---|
| Silice Zeosil 85MP(b) | | | | 57 | |
| Silice E(f) | | | | | 53 |
| Agent de liaison (c) | | 2,5 | 2,5 | 2,5 | 2,5 |
| Oxyde de zinc | 7 | 7 | 7 | 7 | 7 |
| Acide stéarique | 1 | 1 | 1 | 1 | 1 |
| Antioxydant (d) | 1,9 | 1,9 | 1,9 | 1,9 | 1,9 |
| Soufre | 5 | 5 | 5 | 5 | 5 |
| Sulfénamide (e) | 1 | 1 | 1 | 1 | 1 |

(b) Silice commercialisée par la société Rhône-Poulenc sous la dénomination Zeosil 85MP de surfaces spécifiques CTAB et BET de 60 $m^2$/g et 83 $m^2$/g, un diamètre médian D50 de 3μm et un facteur de désagglomération (Fd) de 2,5 ml.

(c) Organosilane polysulfuré commercialisé par la société DEGUSSA sous la dénomination SI 69.

(d) antioxydant : N-(1,3-dimethyl-butyl)-N'-phenyl-p-phénylenediamine

(e) sulfénamide : tertio-butyl benzothiazol sulfénamide (TBBS)

(f) Silice précipitée sous forme de microperles ayant une surface spécifique CTAB de 105 $m^2$/g, BET de 120 $m^2$/g, un diamètre médian (D50) de 4 μm et un facteur de désagglomération (Fd) de 10 ml.

La vulcanisation est effectuée à 150°C pendant 40 minutes. On compare entre elles les propriétés de ces 5 compositions tant à l'état non vulcanisé qu'à l'état vulcanisé.

On compare également la résistance au roulement de ces compositions dans des pneus à carcasse radiale de dimension 175/70-13 MXT conventionnellement fabriqués qui sont en tous points identiques hormis la constitution de la composition élastomérique diénique servant de gomme de calandrage des 2 nappes de travail métalliques constituant l'armature de sommet.

Les résultats sont consignés dans le tableau II.

TABLEAU II

| Compositions | A | B | C | D | E |
|---|---|---|---|---|---|
| Propriété de caoutchouterie : Mooney | 75 | 90 | 95 | 74 | 78 |
| Propriétés à l'état vulcanisé | | | | | |
| MA10 | 6,82 | 6,6 | 10,8 | 6,7 | 6,7 |
| MA100 | 6,0 | 4,2 | 6,2 | 6,0 | 5,1 |
| MA300 | 12 | 7,4 | 10 | 11,6 | 10,6 |
| AR 23°C % | 500 | 550 | 520 | 475 | 520 |
| MFTR.$10^3$ | 190 | 175 | 180 | 120 | 250 |
| MFTRV | 70 | 1500 | 1000 | 2000 | 1500 |
| MFTRA.$10^3$ | 33 | 25 | 30 | 53 | 35 |
| PH à 60°C % | 20 | 25 | 27 | 14 | 20 |
| E°C | 22 | 24 | 25 | 11 | 18 |
| Tgδ à 80°C | 0,104 | 0,110 | 0,122 | 0,064 | 0,080 |
| RR | 100 | 101 | 102 | 95 | 98 |

On constate que les compositions utilisées conformément à l'invention permettent de conserver un niveau de viscosité très voisin de celui du mélange témoin à base de noir de carbone (essai A) qui est relativement faible et qui permet d'obtenir une bonne propriété de calandrage alors que les compositions B et C conduisent à des mélanges durs inappropriés pour constituer des gommes de calandrage d'armature de sommet.

On constate également que les compositions D et E conformes à l'invention possèdent la plus faible hystérèse, c'est-à-dire une hystérèse améliorée par rapport à la composition témoin A chargée au noir de carbone usuellement utilisée comme gomme de calandrage d'armature de sommet tout en conservant une bonne cohésion à cuit notamment une bonne résistance à la fatigue et à la propagation des entailles. L'hystérèse des compositions B et C est nettement supérieure non seulement à celle présentée par les compositions D et E mais aussi à celle présentée par la composition A.

Les pneumatiques comportant une armature de sommet réalisée à l'aide de la composition D ou E présentent une résistance au roulement nettement améliorée sans significativement pénaliser la résistance à la fatigue, c'est-à-dire, la longévité du pneumatique.

Exemple 2

Cet exemple a pour but de montrer qu'il est possible d'accroître le module aux petites déformations de la gomme élastomérique diénique comprenant la silice de faible surface spécifique comme dans le cas d'un renforcement à l'aide de noir de carbone, tout en conservant une faible hystérèse et de bonnes propriétés de cohésion à cuit surtout après vieillissement.

On réalise trois essais avec les formulations indiquées au tableau III.

TABLEAU III

| Compositions | Essai F | Essai G | Essai H |
|---|---|---|---|
| Caoutchouc naturel | 100 | 100 | 100 |
| Noir de carbone N326 | 55 | | |
| Silice ULTRASIL VN2[a] | | 47 | |
| Silice Zeosil 85MP[b] | | | 60 |
| Agent de liaison (c) | | 2,5 | 2,5 |
| Antioxydant (d) | 1,9 | 1,9 | 1,9 |
| Résine formophenolique | 0,7 | 3 | 3 |
| Oxyde de zinc | 7 | 7 | 7 |
| Acide stéarique | 1 | 1 | 1 |
| Soufre | 5 | 5 | 5 |
| Sulfénamide | 1 | 1 | 1 |
| Diphénylguanidine | | 0,6 | 0,6 |
| Hexaméthylènetétramine | 0,3 | 1 | 1 |

(a) (b) (c) (d) : identiques à ceux utilisés dans l'exemple 1

Les résultats sont consignés dans le tableau IV

TABLEAU IV

| Compositions | Essai F | Essai G | Essai H |
|---|---|---|---|
| Propriétés à l'état vulcanisé | | | |
| MA10 | 9,5 | 9,35 | 9,0 |
| MA100 | 7,3 | 6,0 | 7,6 |
| MA300 | 14,6 | 10,8 | 13 |
| AR 100°C % | 420 | 440 | 410 |
| MFTR.$10^3$ | 145 | 123 | 136 |
| MFTRV | 9000 | 12000 | 16000 |
| MFTRA.$10^3$ | 21 | 20 | 61 |

EP 0 722 977 B1

TABLEAU IV (suite)

| Compositions | Essai F | Essai G | Essai H |
|---|---|---|---|
| Propriétés à l'état vulcanisé | | | |
| PH à 60°C % | 23 | 22 | 17 |
| E°C | 24,5 | 24 | 13 |

On constate que le mélange H est particulièrement approprié pour être utilisé en tant que gomme élastomérique d'armature de sommet, notamment en tant que gomme de calandrage des nappes de travail et/ou de sommet.

Exemple 3

Cet exemple a pour but de montrer que les propriétés améliorées sont également obtenues lorsque la charge renforçante n'est pas exclusivement constituée par de la silice de faible surface spécifique mais par exemple par un coupage noir/silice;
Dans cet exemple, on utilise la formulation utilisée à l'exemple 2 sauf en ce qui concerne les quantités de noir de carbone, de silice Zeosil 85MP, d'agent de liaison, de diphénylguanidine et de résine formophénolique.
On réalise 2 essais I et J contenant respectivement une charge silice : noir de 50 % : 50 % et 66 % : 34 %. Les résultats sont consignés dans le tableau V.

TABLEAU V

| Compositions | Essai F | Essai I | Essai J |
|---|---|---|---|
| Noir N326 | 55 | 20 | 30 |
| Silice Zeosil 85 MP (b) | | 40 | 30 |
| Agent de liaison (c) | | 2 | 1,5 |
| Diphénylganidine | | 0,6 | |
| Résine formophénolique | 0,6 | 2 | 2 |
| Propriétés à l'état vulcanisé | | | |
| MA10 | 9,5 | 9,25 | 8,95 |
| MA100 | 7,3 | 7,9 | 6,84 |
| MA300 | 14,6 | 14,4 | 12,8 |
| AR 100°C % | 420 | 330 | 470 |
| PH à 60°C % | 23 | 19 | 20,5 |
| E°C | 24,5 | 17,5 | 20 |

(b) et (c) : identiques à ceux utilisés dans l'exemple 1

**Revendications**

1. Enveloppe de pneumatique à carcasse radiale comportant une bande de roulement, deux bourrelets inextensibles, deux flancs reliant les bourrelets à la bande de roulement et une armature de sommet située entre la carcasse et la bande de roulement comportant au moins deux nappes de tissu câblé, caractérisée en ce que l'armature de sommet comporte une gomme élastomérique diénique comprenant à titre de charge renforçante une silice précipitée possédant une surface spécifique CTAB $\leq$ à 125 m$^2$/g et BET $\leq$ à 125 m$^2$/g.

2. Enveloppe de pneumatique selon la revendication 1, caractérisée en ce que la silice possède une surface spécifique CTAB comprise entre 50 et 120 m$^2$/g.

3. Enveloppe de pneumatique selon les revendications 1 ou 2, caractérisée en ce que la silice possède un diamètre médian (D50), après désagglomération aux ultrasons, inférieur à 5 µm.

4. Enveloppe de pneumatique selon l'une quelconque des revendications 1 à 3, caractérisée en ce que la silice possède un facteur de désagglomération aux ultrasons (Fd) supérieur à 2 ml.

5. Enveloppe de pneumatique selon les revendications 1 ou 2, caractérisée en ce que le diamètre médian (D50) et le facteur de désagglomération aux ultrasons (Fd) de la silice répondent à la relation : Fd > 1,25. (D50) - 5 > 0.

6. Enveloppe de pneumatique selon l'une quelconque des revendications 1 à 5, caractérisée en ce que la gomme élastomérique diénique d'armature de sommet comprend exclusivement de la silice à titre de charge renforçante.

7. Enveloppe de pneumatique selon l'une quelconque des revendications 1 à 5, caractérisée en ce que la gomme élastomérique diénique d'armature de sommet comprend un coupage silice/noir de carbone à titre de charge renforçante.

8. Enveloppe de pneumatique selon la revendication 7, caractérisée en ce que le noir de carbone représente 1 % à 50 % en poids de la charge renforçante totale.

9. Enveloppe de pneumatique selon l'une quelconque des revendications 1 à 8, caractérisée en ce que la gomme élastomérique diénique d'armature de sommet comprend une résine formophénolique ou formorésorcinolique.

10. Enveloppe de pneumatique selon l'une quelconque des revendications 1 à 9, caractérisée en ce que la gomme élastomérique diénique renforcée à la silice constitue la gomme de calandrage d'au moins une nappe de tissu câblé de travail.

11. Enveloppe de pneumatique selon l'une quelconque des revendications 1 à 9, caractérisée en ce que la gomme élastomérique diénique renforcée à la silice constitue la gomme de calandrage de la totalité des nappes de tissu câblé de travail.

12. Enveloppe de pneumatique selon l'une quelconque des revendications 1 à 9, caractérisée en ce que la gomme élastomérique diénique renforcée à la silice constitue la gomme de calandrage d'une nappe à zéro degré.

13. Enveloppe de pneumatique selon l'une quelconque des revendications 1 à 9, caractérisée en ce que la gomme élastomérique diénique renforcée à la silice constitue la gomme de calandrage de toutes les nappes à zéro degré.

14. Enveloppe de pneumatique selon l'une quelconque des revendications 1 à 13, caractérisée en ce que la gomme élastomérique diénique d'armature de sommet est constituée par du caoutchouc naturel ou un mélange de caoutchouc naturel et d'un ou plusieurs caoutchoucs diéniques synthétiques.

15. Enveloppe de pneumatique selon la revendication 14, caractérisée en ce que le ou les caoutchoucs synthétiques sont choisis dans le groupe constitué par un copolymère butadiène-styrène, un polybutadiène, le polyisoprène.

16. Enveloppe de pneumatique selon l'une quelconque des revendications 14 ou 15, caractérisée en ce que le caoutchouc synthétique diénique représente jusqu'à 25 % en poids du poids total d'élastomère.

17. Enveloppe de pneumatique selon l'une quelconque des revendications 1 à 9, caractérisée en ce que l'armature de sommet comporte une couche de gomme renforcée à la silice entre la carcasse et la nappe de tissu câblé de travail usuellement renforcée avec du noir de carbone radialement la plus proche de la carcasse.

18. Enveloppe de pneumatique selon l'une quelconque des revendications 1 à 9, caractérisée en ce que l'armature de sommet comporte une couche de gomme renforcée à la silice au-dessus de la nappe de tissu câblé de travail usuellement renforcée avec du noir de carbone radialement la plus éloignée de la carcasse.

19. Enveloppe de pneumatique selon l'une quelconque des revendications 1 à 18, caractérisée en ce que la composition de caoutchouc constituant la bande de roulement est majoritairement renforcée par de la silice.

20. Enveloppe de pneumatique selon la revendication 19, caractérisée en ce que la silice est une silice hautement dispersible de surface spécifique CTAB > à 125 m$^2$/g.

21. Enveloppe de pneumatique selon l'une quelconque des revendications 1 à 18, caractérisée en ce que la composition de caoutchouc constituant la bande de roulement est exclusivement ou majoritairement renforcée par du noir de carbone.

22. Utilisation d'une silice de surface spécifique CTAB ≤ à 125 m$^2$/g et BET ≤ à 125 m$^2$/g en tant que charge renforçante d'une composition élastomérique diénique employée à titre de gomme d'armature de sommet d'un pneumatique à carcasse radiale.

23. Utilisation d'une silice selon la revendication 22, caractérisée en ce que la silice possède un diamètre médian (D50) après désagglomération aux ultrasons et un facteur de désagglomération aux ultrasons (Fd) répondant à la relation : Fd > 1,25.(D50) - 5 > 0.

24. Composition élastomérique diénique utilisable dans la constitution d'une armature de sommet d'un pneumatique à carcasse radiale ayant une résistance au roulement réduite comportant à titre de charge renforçante une silice de surface spécifique CTAB ≤ à 125 m$^2$/g et BET ≤. à 125 m$^2$/g.

25. Composition selon la revendication 24, caractérisée en ce que la silice possède un diamètre médian (D50) après désagglomération aux ultrasons et un facteur de désagglomération aux ultrasons (Fd) répondant à la relation : Fd > 1,25.(D50) - 5 > 0.

**Patentansprüche**

1. Luftreifen mit Radialkarkasse, der einen Laufstreifen, zwei nicht dehnbare Wülste, zwei Seitenflächen, die die Wülste mit dem Laufstreifen verbinden, und einen Gürtel umfaßt, der zwischen der Karkasse und dem Laufstreifen angeordnet ist, der mindestens zwei Kordlagen aufweist, wobei der Gürtel einen Dienelastomergummi enthält, der als verstärkenden Füllstoff eine Fällungskieselsäure enthält, die eine mit CTAB bestimmte spezifische Oberfläche ≤ 125 m$^2$/g und eine spezifische Oberfläche nach BET ≤ 125 m$^2$/g aufweist.

2. Luftreifen nach Anspruch 1, dadurch gekennzeichnet, daß die Kieselsäure eine mit CTAB bestimmte spezifische Oberfläche von 50 bis 120 m$^2$/g aufweist.

3. Luftreifen nach einem der Ansprüche 1 und 2, dadurch gekennzeichnet, daß die Kieselsäure einen mittleren Durchmesser (D50) nach der Desagglomeration mit Ultraschall von weniger als 5 μm aufweist.

4. Luftreifen nach einem der Ansprüche 1 bis 3, dadurch gekennzeichnet, daß die Kieselsäure einen Desagglomerationsfaktor bei Ultraschallbehandlung (Df) größer als 2 ml aufweist.

5. Luftreifen nach einem der Ansprüche 1 und 2, dadurch gekennzeichnet, daß der mittlere Durchmesser (D50) und der Desagglomerationsfaktor (Df) bei Ultraschallbehandlung der Kieselsäure die Relation Fd > 1,25.(D50) - 5 > 0 erfüllt.

6. Luftreifen nach einem der Ansprüche 1 bis 5, dadurch gekennzeichnet, daß der Dienelastomergummi des Gürtels ausschließlich Kieselsäure als verstärkenden Füllstoff enthält.

7. Luftreifen nach einem der Ansprüche 1 bis 5, dadurch gekennzeichnet, daß der Dienelastomergummi des Gürtels einen Verschnitt aus Kieselsäure und Ruß als verstärkenden Füllstoff enthält.

8. Luftreifen nach Anspruch 7, dadurch gekennzeichnet, daß der Ruß in einem Anteil von 1 bis 50 Gew.-% des gesamten verstärkenden Füllstoffs enthalten ist.

9. Luftreifen nach einem der Ansprüche 1 bis 8, dadurch gekennzeichnet, daß der Dienelastomergummi des Gürtels ein Formaldehydphenolharz oder Formaldehydresorcinharz enthält.

10. Luftreifen nach einem der Ansprüche 1 bis 9, dadurch gekennzeichnet, daß der kieselsäureverstärkte Dienelastomergummi den Kalandriergummi für mindestens eine Arbeitskordlage bildet.

11. Luftreifen nach einem der Ansprüche 1 bis 9, dadurch gekennzeichnet, daß der kieselsäureverstärkte Dienelastomergummi den Kalandriergummi für alle Arbeitskordlagen bildet.

**12.** Luftreifen nach einem der Ansprüche 1 bis 9, dadurch gekennzeichnet, daß der kieselsäureverstärkte Dienelastomergummi den Kalandriergummi für eine Null-Grad-Lage bildet.

**13.** Luftreifen nach einem der Ansprüche 1 bis 9, dadurch gekennzeichnet, daß der kieselsäureverstärkte Elastomergummi den Kalandriergummi für alle Null-Grad-Lagen bildet.

**14.** Luftreifen nach einem der Ansprüche 1 bis 13, dadurch gekennzeichnet, daß der Dienelastomergummi des Gürtels aus einem Naturkautschuk oder aus einem Gemisch aus einem Naturkautschuk und einem oder mehreren synthetischen Dienkautschuken besteht.

**15.** Luftreifen nach Anspruch 14, dadurch gekennzeichnet, daß der oder die Synthesekautschuke unter Butadien-Styrol-Copolymeren, Polybutadienen, Polyisoprenen ausgewählt sind.

**16.** Luftreifen nach einem der Ansprüche 14 und 15, dadurch gekennzeichnet, daß der synthetische Kautschuk bis zu 25 Gew.-% des Gesamtgewichts des Elastomers ausmacht.

**17.** Luftreifen nach einem der Ansprüche 1 bis 9, dadurch gekennzeichnet, daß der Gürtel eine kieselsäureverstärkte Gummischicht zwischen der Karkasse und der üblicherweise mit Ruß verstärkten Arbeitskordlage aufweist, die in Richtung des Radius der Karkasse am nächsten ist.

**18.** Luftreifen nach einem der Ansprüche 1 bis 9, dadurch gekennzeichnet, daß der Gürtel eine kieselsäureverstärkte Gummischicht oberhalb der Arbeitskordlage, die üblicherweise mit Ruß verstärkt ist, aufweist, die in Richtung des Radius von der Karkasse am weitesten entfernt ist.

**19.** Luftreifen nach einem der Ansprüche 1 bis 18, dadurch gekennzeichnet, daß die Kautschukzusammensetzung, die den Laufstreifen bildet, überwiegend mit Kieselsäure verstärkt ist.

**20.** Luftreifen nach Anspruch 19, dadurch gekennzeichnet, daß die Kieselsäure eine hochdispergierbare Kieselsäure mit einer mit CTAB bestimmten spezifischen Oberfläche > 125 m$^2$/g ist.

**21.** Luftreifen nach einem der Ansprüche 1 bis 18, dadurch gekennzeichnet, daß die Kautschukzusammensetzung, die den Laufstreifen bildet, ausschließlich oder überwiegend mit Ruß verstärkt ist.

**22.** Verwendung einer Kieselsäure mit einer mit CTAB bestimmten spezifischen Oberfläche ≤ 125 m$^2$/g und einer spezifischen Oberfläche nach BET ≤ 125 m$^2$/g als verstärkender Füllstoff einer Dienelastomerzusammensetzung, die als Gummi für den Gürtel eines Radialreifens eingesetzt wird.

**23.** Verwendung einer Kieselsäure nach Anspruch 22, dadurch gekennzeichnet, daß die Kieselsäure einen mittleren Durchmesser (D50) nach der Desagglomeration mit Ultraschall und einen Desagglomerationsfaktor bei Ultraschallbehandlung (Df) gemäß der Relation : Fd > 1,25. (D50) - 5 > 0 aufweist.

**24.** Dienelastomerzusammensetzung, die für den Aufbau des Gürtels eines Luftreifens mit Radialkarkasse verwendbar ist, der einen verringerten Rollwiderstand aufweist, die als verstärkenden Füllstoff eine Kieselsäure mit einer mit CTAB bestimmten spezifischen Oberfläche ≤ 125 m$^2$/g und einer spezifischen Oberfläche nach BET ≤ 125 m$^2$/g enthält.

**25.** Zusammensetzung nach Anspruch 24, dadurch gekennzeichnet, daß die Kieselsäure einen mittleren Durchmesser (D50) nach der Desagglomeration mit Ultraschall und einen Desagglomerationsfaktor nach Ultraschallbehandlung (Df) gemäß der Relation Fd > 1,25. (D50) - 5 > 0 aufweist.

**Claims**

**1.** A radial carcass tyre having a tread, two non-stretchable beads, two sidewalls connecting the beads to the tread, and a crown reinforcement located between the carcass and the tread comprising at least two cord fabric plies, characterised in that the crown reinforcement comprises a diene elastomeric rubber containing as reinforcing filler a precipitated silica having a CTAB specific surface area ≤ 125 m$^2$/g and a BET specific surface area ≤ 125 m$^2$/g.

**2.** A tyre according to Claim 1, characterised in that the silica has a CTAB specific surface area of between 50 and 120 m$^2$/g.

**3.** A tyre according to Claims 1 or 2, characterised in that the silica has a median diameter (D50), after ultrasonic disagglomeration, of less than 5 $\mu$m.

**4.** A tyre according to any one of Claims 1 to 3, characterised in that the silica has an ultrasonic disagglomeration factor (Fd) of more than 2 ml.

**5.** A tyre according to Claims 1 or 2, characterised in that the median diameter (D50) and the ultrasonic disagglomeration factor (Fd) of the silica are in accordance with the relationship:

$$Fd > 1.25. (D5O) - 5 > 0.$$

**6.** A tyre according to any one of Claims 1 to 5, characterised in that the crown reinforcement diene elastomeric rubber consists exclusively of silica as reinforcing filler.

**7.** A tyre according to any one of Claims 1 to 5, characterised in that the crown reinforcement diene elastomeric rubber comprises a silica/carbon black blend as reinforcing filler.

**8.** A tyre according to Claim 7, characterised in that the carbon black represents 1% to 50% by weight of the total reinforcing filler.

**9.** A tyre according to any one of Claims 1 to 8, characterised in that the crown reinforcement diene elastomeric rubber comprises a formyl phenol or formyl resorcinol resin.

**10.** A tyre according to any one of Claims 1 to 9, characterised in that the silica-reinforced diene elastomeric rubber constitutes the calendering rubber of at least one working cord fabric ply.

**11.** A tyre according to any one of Claims 1 to 9, characterised in that the silica-reinforced diene elastomeric rubber constitutes the calendering rubber of all the working cord fabric plies.

**12.** A tyre according to any one of Claims 1 to 9, characterised in that the silica-reinforced diene elastomeric rubber constitutes the calendering rubber of a zero-degree ply.

**13.** A tyre according to any one of Claims 1 to 9, characterised in that the silica-reinforced diene elastomeric rubber constitutes the calendering rubber of all the zero-degree plies.

**14.** A tyre according to any one of Claims 1 to 13, characterised in that the crown reinforcement diene elastomeric rubber consists of natural rubber or a mixture of natural rubber and one or more synthetic diene rubbers.

**15.** A tyre according to Claim 14, characterised in that the synthetic rubber or rubbers are selected from the group consisting of a butadiene-styrene copolymer, a polybutadiene and polyisoprene.

**16.** A tyre according to any one of Claims 14 or 15, characterised in that the diene synthetic rubber represents up to 25% by weight of the total weight of elastomer.

**17.** A tyre according to any one of Claims 1 to 9, characterised in that the crown reinforcement comprises a layer of silica-reinforced rubber between the carcass and the working cord fabric ply customarily reinforced with carbon black which is radially closest to the carcass.

**18.** A tyre according to any one of Claims 1 to 9, characterised in that the crown reinforcement comprises a layer of silica-reinforced rubber above the working cord fabric ply customarily reinforced with carbon black which is radially furthest from the carcass.

**19.** A tyre according to any one of Claims 1 to 18, characterised in that the rubber composition constituting the tread is reinforced in a preponderant amount by silica.

**20.** A tyre according to Claim 19, characterised in that the silica is a highly dispersible silica having a CTAB specific surface area > 125 m$^2$/g.

**21.** A tyre according to any one of Claims 1 to 18, characterised in that the rubber composition constituting the tread is reinforced exclusively or in a preponderant amount by carbon black.

**22.** The use of a silica of a CTAB specific surface area ≤ 125 m$^2$/g and a BET specific surface area ≤ 125 m$^2$/g as a reinforcing filler for a diene elastomeric composition used as a crown reinforcement rubber for a radial carcass tyre.

**23.** The use of a silica according to Claim 22, characterised in that the silica has a median diameter (D50) after ultrasonic disagglomeration and an ultrasonic disagglomeration factor (Fd) in accordance with the relationship: Fd > 1.25.(D50) - 5 > 0.

**24.** A diene elastomeric composition for use in the manufacture of a crown reinforcement of a radial carcass tyre having reduced rolling resistance, including as a reinforcing filler a silica of a CTAB specific surface area ≤ 125 m$^2$/g and a BET specific surface area ≤ 125 m$^2$/g.

**25.** A composition according to Claim 24, characterised in that the silica has a median diameter (D50) after ultrasonic disagglomeration and an ultrasonic disagglomeration factor (Fd) in accordance with the relationship: Fd > 1.25. (D50) - 5 > 0.